# EUROPEAN PATENT APPLICATION

(11) **EP 4 270 334 A1**
(43) Date of publication of application: **01.11.2023**
(21) Application number: 23168773.2
(22) Date of filing: 19.04.2023
(51) Int. Cl.: G06V 40/16, G06V 10/82, G06V 40/10, G06V 10/74

(54) **INFORMATION PROCESSING APPARATUS, METHOD FOR CONTROLLING THE SAME, COMPUTER-READABLE STORAGE MEDIUM, AND COMPUTER PROGRAM**

(30) Priority: 28.04.2022 JP 2022074828
(71) Applicant: CANON KABUSHIKI KAISHA, Tokyo 146-8501 (JP)
(72) Inventor: TODOROKI, Yusuke, Tokyo, 146-8501 (JP)
(74) Representative: Canon Europe Limited

(57) **Abstract**

An information processing apparatus comprises an object detection means for detecting a region of a first object in an image, an editing means for editing the image based on the detected region of the first object, a first attribute detection means for detecting a first subject having a first attribute in the edited image, a second attribute detection means for, in a case where the first subject having the first attribute is detected in the edited image, detecting a second subject having a second attribute different from the first attribute in the edited image, and a sorting means for sorting the edited image based on a result of detecting the second subject having the second attribute.

## Description

### BACKGROUND OF THE INVENTION

### Field of the Invention

The present invention relates to an information processing apparatus, a method for controlling the information processing apparatus, a computer-readable storage medium, and a computer program.

### Description of the Related Art

In a case where many images are captured by a camera, it is burdensome for the user to sort out images suitable for the user's purpose. Japanese Patent Application Laid-Open No. 2007-20105 discusses an imaging apparatus that performs face detection on captured images and erases, based on information such as the expression or direction of a detected face, the opening or closing of the eyes, and the direction of the eyes, an image in which no face is detected and an image which does not match imaging conditions.

The imaging apparatus discussed in Japanese Patent Application Laid-Open No. 2007-20105 can classify images based only on face regions in original captured images. Thus, there is a case where an image suitable for the user's purpose is not selected, or an image unsuitable for the user's purpose is selected.

### SUMMARY OF THE INVENTION

The present invention is directed to sorting out an image suitable for a user's purpose from among a plurality of images.

According to a first aspect of the present invention, there is provided an information processing apparatus as specified in claims 1 to 16. According to a second aspect of the present invention, there is provided a method for controlling an information processing apparatus as specified in claim 17. According to a third aspect of the present invention, there is provided a computer-readable storage medium as specified in claim 18. According to a fourth aspect of the present invention, there is provided a computer program as specified in claim 19.

Further features of the present invention will become apparent from the following description of embodiments with reference to the attached drawings.

### BRIEF DESCRIPTION OF THE DRAWINGS

Fig. 1 is a block diagram illustrating an example of a configuration of an information processing system.
Fig. 2 is a block diagram illustrating an example of a functional configuration of an image sorting apparatus.
Fig. 3 is a flowchart illustrating an example of processing by the image sorting apparatus.
Fig. 4 is a flowchart illustrating an example of image sorting processing.
Fig. 5 is a flowchart illustrating an example of recommended image extraction processing.
Fig. 6 is a diagram illustrating examples of folders that store images based on a result of the image sorting processing.

### DESCRIPTION OF THE EMBODIMENTS

Embodiments of the present invention will be described with reference to the drawings. The following embodiments, however, are not intended to limit the present invention according to claims, and not all the combinations of the features described in the present embodiments are essential as solutions to the problem disclosed in the present invention. In the following description, a same composing element is denoted with a same reference sign. Each of the embodiments of the present invention described below can be implemented solely or as a combination of a plurality of the embodiments or features thereof where necessary or where the combination of elements or features from individual embodiments in a single embodiment is beneficial.

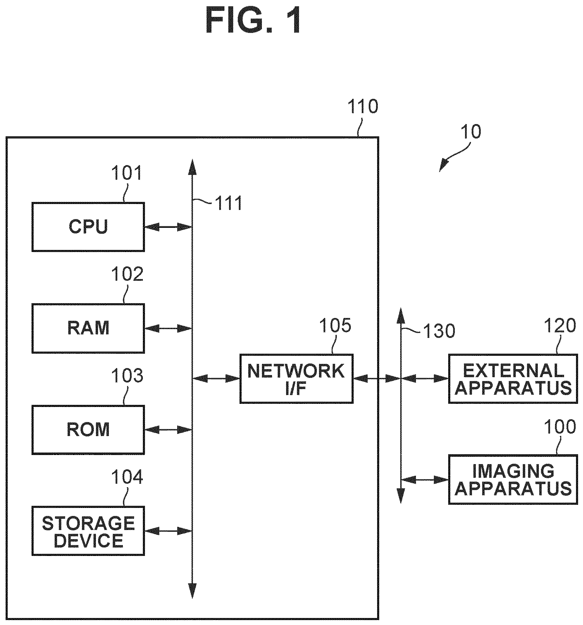

Fig. 1 is a block diagram illustrating an example of a configuration of an information processing system 10.

The information processing system 10 includes an imaging apparatus 100, an image sorting apparatus 110, and an external apparatus 120. The imaging apparatus 100, the image sorting apparatus 110, and the external apparatus 120 are communicably connected to each other via a network 130. The network 130 can be a wireless network or a wired network such as a Universal Serial Bus (USB) cable.

The imaging apparatus 100 is a digital camera that automatically captures images based on predetermined conditions. For example, the imaging apparatus 100 automatically captures images at predetermined intervals, or automatically captures images based on information regarding a subject (e.g., a subject's face) detected by the imaging apparatus 100. The imaging apparatus 100 includes a storage unit that stores the captured images. The imaging apparatus 100 transmits the plurality of stored images to the image sorting apparatus 110 via the network 130. The imaging apparatus 100 can have an automatic pan and tilt function.

The image sorting apparatus 110 automatically sorts the plurality of images received from the imaging apparatus 100. The image sorting apparatus 110 is an example of an information processing apparatus. Since the plurality of images received from the imaging apparatus 100 is automatically captured by the imaging apparatus 100, the received images may include many images unsuitable for a user's purpose. For this reason, the image sorting apparatus 110 sorts out images suitable for the user's purpose, thereby enabling the user to reduce the workload of visually sorting out the images suitable for the user's purpose. A specific configuration and processing of the image sorting apparatus 110 will be described below. The image sorting apparatus 110 transmits automatically sorted images to the external apparatus 120 via the network 130. The image sorting apparatus 110 can be integrated with the imaging apparatus 100. The image sorting apparatus 110 can perform image sorting processing as described below, read images extracted as "recommended images", from a storage device 104, and display the read images on a screen of a display unit (not illustrated) of the image sorting apparatus 110 to present the images to an operator of the image sorting apparatus 110.

The external apparatus 120 stores the images automatically sorted and transmitted by the image sorting apparatus 110. The external apparatus 120 is an external personal computer (PC) or an external server. For example, the external apparatus 120 is managed by a company that sells images to the user. The images stored in the external apparatus 120 can be viewed or selected by the user via an electronic device, such as a smartphone, a tablet terminal, or a PC, owned by the user through, for example, a web site managed by the company. By accessing the web site using a web browser of the electronic device, the user can display the images sorted by the image sorting apparatus 110 and stored in the external apparatus 120 as described below on a window of the web browser based on the sorting result. Alternatively, the information processing system 10 can be configured so that the external apparatus 120 includes a display unit and displays the images stored in the external apparatus 120 on a screen of the display unit of the external apparatus 120 based on the sorting result without going through the web site in order to enable the user to directly view and select the images.

### <Hardware Configuration>

An example of a hardware configuration of the image sorting apparatus 110 will be described with reference to Fig. 1.

The image sorting apparatus 110 includes a central processing unit (CPU) 101, a random-access memory (RAM) 102, a read-only memory (ROM) 103, the storage device 104, and a network interface (I/F) 105.

The CPU 101 executes a program recorded in the ROM 103 or a program such as an operating system (OS) or an application loaded from the storage device 104 into the RAM 102. The CPU 101 executes a program recorded in the ROM 103, thereby exerting the function of an image sorting apparatus that reads a plurality of images and sorts out images suitable for the user's purpose from among the read images. The present embodiment, however, is not limited thereto. Alternatively, the image sorting apparatus 110 can include an image sorting processing unit implemented by a dedicated circuit such as a graphics processing unit (GPU) or an application-specific integrated circuit (ASIC).

The RAM 102 is a main memory of the CPU 101 and functions as a work area.

The ROM 103 records various programs.

The storage device 104 stores the images received from the imaging apparatus 100. The storage device 104 can be built into the image sorting apparatus 110, or can be a storage medium attachable to and detachable from the image sorting apparatus 110.

The network I/F 105 functions as an interface for connecting the image sorting apparatus 110 to the network 130. For example, the network 130 can be a local area network (LAN) or a public switched telephone network (PSTN).

A system bus 111 is a communication path for performing communication between the hardware components.

### <Functional Configuration>

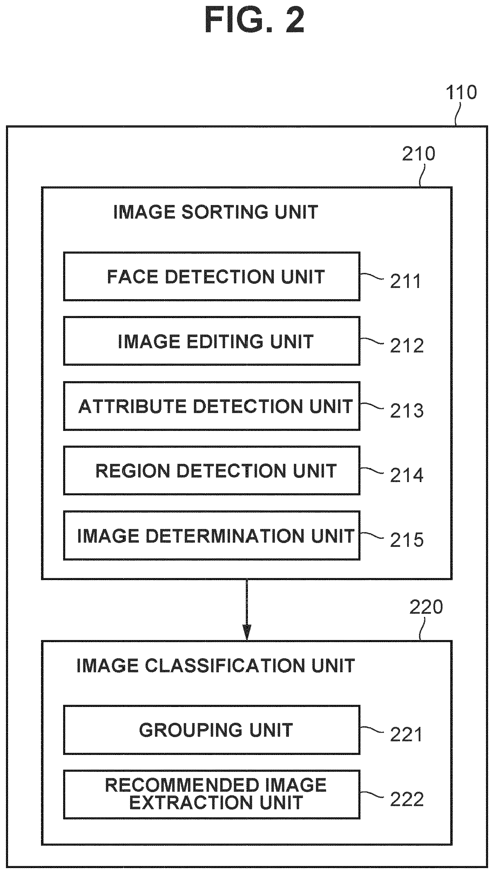

An example of a functional configuration of the image sorting apparatus 110 will be described with reference to Fig. 2.

Fig. 2 is a block diagram illustrating an example of the functional configuration of the image sorting apparatus 110. Fig. 2 illustrates only functions related to processing for sorting out the images suitable for the user's purpose. The functional configuration illustrated in Fig. 2 is implemented by the CPU 101 executing a program recorded in the ROM 103 or a program such as an application loaded from the storage device 104 into the RAM 102.

The execution result of each processing is held in the RAM 102.

The image sorting apparatus 110 includes an image sorting unit 210 and an image classification unit 220. The image sorting unit 210 sorts images as "recommended" from among a plurality of images depending on the user's purpose. The image classification unit 220 extracts, from among the images sorted as "recommended", images to be finally presented to the user as "recommended images" suitable for the user's purpose. The image sorting apparatus 110 may not necessarily include the image classification unit 220, and may present all the images sorted as "recommended" by the image sorting unit 210 to the user.

The images suitable for the user's purpose refer to the images desired by the user. In the present embodiment, for example, a case is assumed where pictures of everyday life in a kindergarten or nursery school are sold to a guardian. The user's purpose according to the present embodiment refers to a purpose where the user (the guardian) purchases images in which the user's child in the kindergarten or nursery school appears. Thus, the images ("recommended images") suitable for the purpose according to the present embodiment are the images that the user wishes to purchase. Examples of the images suitable for the purpose include images in which the user's child is the main subject, such as an image in which the child appears at the center and an image in which the region of the child covers a large area. On the other hand, the images unsuitable for the purpose according to the present embodiment refer to the images that the user does not wish to purchase. Examples of the images unsuitable for the purpose include an image in which an adult appears as the main subject instead of the child, and an image in which the arms or body of another person or a still object such as a piece of furniture or a utensil appears in front of the child and blocks a part of the region of the child. The images suitable for the purpose are not limited to the images that the user wishes to purchase, and can be the images that the user wishes to save without deleting the images.

The image sorting unit 210 includes a face detection unit 211, an image editing unit 212, an attribute detection unit 213, a region detection unit 214, and an image determination unit 215.

The face detection unit 211 detects a face region in an image using an image processing technique.

The image editing unit 212 edits the image based on the face region detected by the face detection unit 211. The image editing unit 212 performs processing such as cropping the image about the face region.

The attribute detection unit 213 detects a subject having a predetermined attribute based on the image edited by the image editing unit 212. The attribute detection unit 213 according to the present embodiment detects the attribute of a person as a subject, such as "adult" or "child".

In the image in which the subject having the predetermined attribute is detected by the attribute detection unit 213, the region detection unit 214 detects a region (an unnecessary region) where there is a blocking object captured at the time of imaging.

Based on the detection results of the face detection unit 211, the attribute detection unit 213, and the region detection unit 214, the image determination unit 215 sorts the edited images depending on the user's purpose.

The image classification unit 220 includes a grouping unit 221 and a recommended image extraction unit 222.

The grouping unit 221 determines the images sorted as "recommended" by the image sorting unit 210 as "candidate recommended images" and groups the images based on similarity in composition or color tone, or persons appearing in the images.

The recommended image extraction unit 222 extracts a specified number of images from each of the groups as "recommended images" suitable for the user's purpose.

### <Flowcharts>

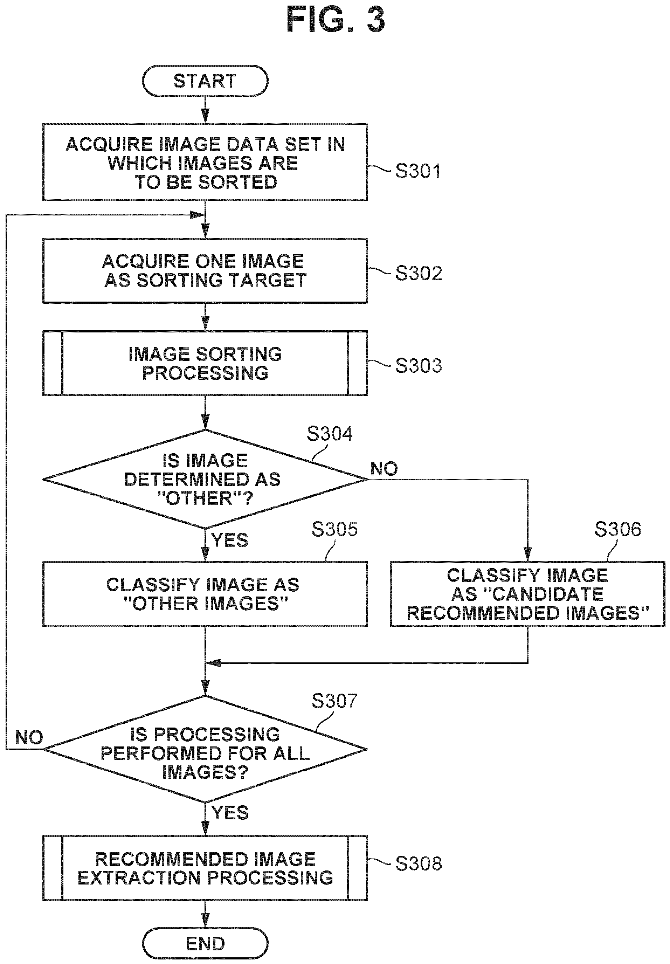

Fig. 3 is a flowchart related to the image sorting processing by the image sorting apparatus 110.

The flowchart illustrated in Fig. 3 is implemented by the CPU 101 executing a program recorded in the ROM 103 or a program such as an application loaded from the storage device 104 into the RAM 102.

In step S301, the image sorting unit 210 acquires an image data set in which images are to be sorted based on whether the images are suitable for the user's purpose. In the present embodiment, the image sorting unit 210 acquires the image data set by receiving, via the network I/F 105, the plurality of images automatically captured by the imaging apparatus 100. The image data set, however, is not limited to the images received from the imaging apparatus 100, and can be the images stored in the ROM 103 or the storage device 104 or the images received from the external apparatus 120 via the network I/F 105. The image data set is also not limited to the images automatically captured by the imaging apparatus 100, and can be the images intentionally captured by the user.

In step S302, the image sorting unit 210 acquires one image as a sorting target from the acquired image data set.

At this time, the image sorting unit 210 can process an image intentionally captured by the user so that the image is not sorted as "other". More specifically, the user or the imaging apparatus 100 records an image intentionally captured by the user in association with evaluation information. The evaluation information is, for example, a value indicating a favorite or a value indicating an evaluation rank. When the image sorting unit 210 acquires the image, the image sorting unit 210 reads the evaluation information associated with the image. If the evaluation information is greater than or equal to a predetermined value, the image sorting unit 210 skips steps S302 to S306 without treating the acquired image as the sorting target, and the processing can proceed to step S307.

In step S303, the image sorting unit 210 performs the image sorting processing for sorting the image acquired in step S302.

In the case of the purpose according to the present embodiment, an image in which the guardian's child does not appear and an image in which the main subject is not the guardian's child are unnecessary for the guardian. An image in which a part of the body, such as the arms or back, of a person other than the main subject appears, an image in which a blocking object such as a utensil placed on a desk in front of the main subject appears in some area, and an image in which a blocking object covers the main subject are also unnecessary for the guardian.

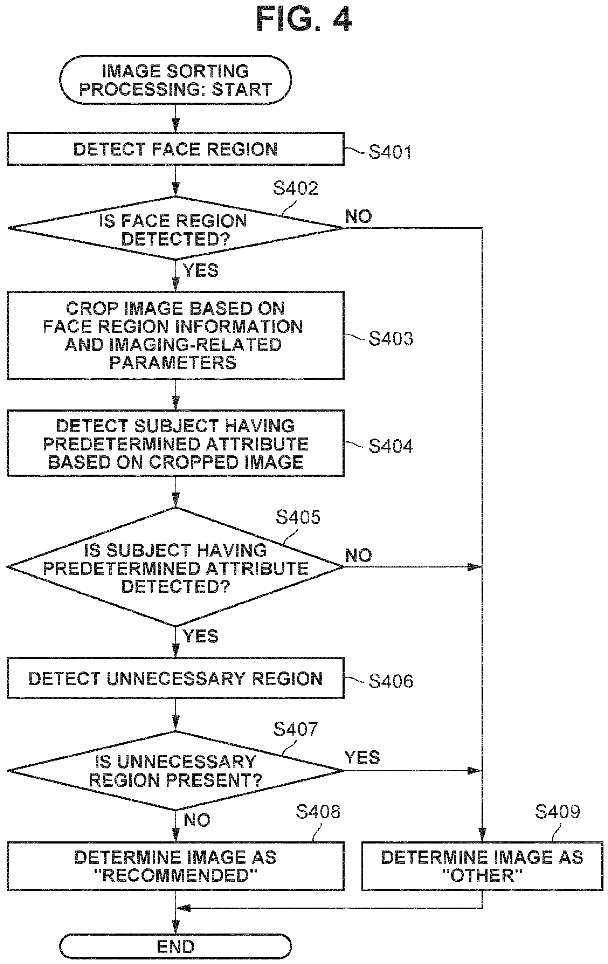

Fig. 4 is a flowchart illustrating the image sorting processing.

### <Face Region Detection>

In step S401, the face detection unit 211 detects a face region in the target image using an image processing technique and obtains the coordinates and size of the face region. Using a machine learning technique as the image processing technique for detecting the face region, the face detection unit 211 inputs the image to a neural network model to output the coordinates and size of the face region based on the input image. The face detection unit 211 stores the output coordinates and size of the face region. To detect a face region, a face detection technique using a known image processing technique can be employed.

In step S402, the image determination unit 215 determines whether the face detection unit 211 detects a face region in the target image in step S401. In a case where the face detection unit 211 detects a face region (YES in step S402), the processing proceeds to step S403. In a case where the face detection unit 211 does not detect a face region (NO in step S402), the processing proceeds to step S409. The case where the face detection unit 211 does not detect a face region corresponds to an image in which a person as a subject does not appear and which is unsuitable for the user's purpose according to the present embodiment.

### < Image Editing >

In step S403, the image editing unit 212 edits the target image based on the face region detected in step S401. More specifically, based on information regarding the coordinates and size of the face region and imaging-related parameters in capturing the target image, the image editing unit 212 crops the target image so that the size of the face region of the subject is large. The imaging-related parameters include the International Organization for Standardization (ISO) sensitivity and the shutter speed, and are recorded in association with the image.

The image editing unit 212 determines a cropping region so that a certain blank portion is formed in the periphery of the face region about the coordinates of the face region. The size of the blank portion can be changed depending on the size of the face region so that, for example, the size of left and right blank regions is the same as the size of the horizontal width of the face region. The size of the blank portion can be adjusted based on the size of the image after the cropping so that, for example, the image has a horizontal width of 2000 pixels after the cropping. If the cropping region is too small, an issue in image quality can arise, such as the prominence of noise or a decrease in sense of resolution. Thus, the size of the cropping region can be changed based on the imaging-related parameters by, for example, setting large blank regions in the periphery of the face when an image with high ISO sensitivity is cropped.

The method for determining the cropping region is not limited to the above. For example, the following method can be employed. The direction of the face or body of a person is estimated from the target image using a machine learning model, and if the person faces forward, the cropping region is set so that the left and right blank regions are equal. If the person faces rightward, the cropping region is set so that the ratio of the blank region on the right side of the subject is great. Alternatively, the cropping region can be directly calculated from the target image using a machine learning model.

There is a case where a plurality of face regions is detected in step S401. In this case, the image editing unit 212 can determine the cropping region so as to include all the detected face regions in the image after the cropping, and generate a single cropped image, or can determine the cropping region for each of the detected face regions and generate a plurality of cropped images.

The image editing unit 212 stores the generated cropped image in the ROM 103 or the storage device 104. At this time, the image editing unit 212 can overwrite the target image with the cropped image, or can keep the target image.

The image editing unit 212 can perform not only the processing for generating the cropped image, but also image processing for improving the image quality by, for example, converting the pixel values of the cropped image or the target image by contrast adjustment and color tone correction.

### <Predetermined Attribute Detection>

In step S404, the attribute detection unit 213 detects a subject having a predetermined attribute based on the image edited in step S403 (i.e., the cropped image). The predetermined attribute according to the present embodiment refers to "child" in a case where the subject is classified as "adult" or "child". In the present embodiment, using an image processing technique, the attribute detection unit 213 detects whether the attribute of the main subject is "child". The image based on which the attribute detection unit 213 detects whether the attribute of the main subject is "child" is the cropped image centered on the face region in advance. If whether the attribute of the main subject is "child" is detected based on, for example, an image which is captured at a location far away from a child and in which the child appears small, or an image in which a plurality of children and adults appears, the detection accuracy decreases because the image region is small. In the present embodiment, whether the attribute of the main subject is "child" is detected based on the cropped image, whereby the detection accuracy can be increased. Moreover, the size of image data of the cropped image is smaller than that of the image before the cropping, which makes it possible to shorten the processing time.

In a case where face detection and cropping are performed after the attribute of the main subject is detected, if the face detection or the detection of the attribute is incorrect, a cropped image unsuitable for the user's purpose is finally generated and presented to the user. For example, if a child is detected as the main subject in an image including both the child and an adult, but the detection of the face region of the child fails after that, a cropped image focused on the adult is generated, and the image in which the main subject is the adult is presented to the user. In the present embodiment, the attribute of the main subject is detected based on the cropped image centered on the face region, which makes it possible to prevent the presentation of an image unsuitable for the user's purpose.

To detect whether the attribute of the main subject is "child", the attribute detection unit 213 first determines, as the main subject, a subject having a face region closer to the center coordinates among large face regions based on the information regarding the coordinates and size of each face region detected in step S401. Next, based on the face region of the determined main subject, the attribute detection unit 213 estimates the age of the main subject using a known age estimation technique or a machine learning model and thereby can detect whether the attribute of the main subject is "child". Alternatively, using a machine learning technique, the attribute detection unit 213 can input the image to a neural network model, and the attribute of the subject can be detected based on the input image. Yet alternatively, using a machine learning technique, an image recognition model that makes a binary determination with image data as an input can directly detect whether the main subject is a child.

In step S405, the image determination unit 215 determines whether the attribute detection unit 213 detects the subject having the predetermined attribute in step S404. In the present embodiment, the attribute detection unit 213 determines whether the attribute of the main subject in the cropped image is "child". If the attribute of the main subject is "child" (YES in step S405), the processing proceeds to step S406. If the attribute of the main subject is not "child" (NO in step S405), the processing proceeds to step S409. The cropped image in which the attribute of the main subject is not "child" corresponds to an image unsuitable for the user's purpose according to the present embodiment.

While the case has been described where the predetermined attribute according to the present embodiment is "child" when the subject is classified as "adult" or "child", the predetermined attribute can be "adult". Alternatively, for example, the predetermined attribute can be "male" or "female" when the subject is classified by gender (male or female). Yet alternatively, the predetermined attribute can be "person in uniform" or "person not in uniform" when the subject is classified as "person in uniform" or "person not in uniform". As described above, the predetermined attribute, the method for determining the attribute, the design of the machine learning model, or the combination of models can be appropriately changed depending on the user's purpose.

### <Unnecessary Region Detection>

In step S406, the region detection unit 214 detects a region (an unnecessary region) where a subject having the attribute of a blocking object appears, in the cropped image in which the subject having the predetermined attribute is detected. The blocking object according to the present embodiment refers to a part of the body, such as the arms or back, of a person other than the main subject or a utensil placed on a desk in front of the main subject. In the present embodiment, the region detection unit 214 detects the region of the subject having the attribute of the blocking object (i.e., the unnecessary region) in the cropped image in which the attribute of the main subject is "child".

The image in which an unnecessary region is detected is the cropped image centered on the face region in advance.

Thus, depending on the positional relationship between an unnecessary region and the main subject, the whole or a part of the unnecessary region can be removed from the image by the cropping in step S403. Further, an unnecessary region is detected based on not the image before the cropping but the cropped image centered on the face region, which makes it possible to prevent the images suitable for the user's purpose from being excessively determined as "other".

In step S407, the image determination unit 215 determines whether an unnecessary region is detected in step S406. If an unnecessary region is present, the image determination unit 215 sorts the image based on the positional relationship between the unnecessary region and the main subject. In the present embodiment, if an unnecessary region is present in the cropped image (YES in step S407), more specifically, if an unnecessary region having a certain area or more (an area greater than or equal to a threshold) is present in the cropped image, or an unnecessary region hides a part of the main subject, the processing proceeds to step S409. In the present embodiment, if an unnecessary region is not present in the cropped image (NO in step S407), more specifically, if an unnecessary region having the certain area or more is not present in the cropped image and an unnecessary region does not hide the main subject, the processing proceeds to step S408. In step S408, the image determination unit 215 determines the cropped image as "recommended".

The method for sorting the cropped image in step S407 is as follows. The cropped image is recognized by being segmented into the region of the main subject and an unnecessary region such as the arms or back of another person using a segmentation technique with a deep learning model, and the determination can be made based on whether the area of the detected unnecessary region is greater than or equal to a threshold.

Alternatively, in step S407, an image recognition model that makes a binary determination with the cropped image as an input can directly sort the cropped image. The image recognition model that makes a binary determination can be divided into a model for determining a part of the body, such as the arms or back, of a person other than the main subject as an unnecessary region, and a model for determining a still object such as a utensil placed on a desk in front of the main subject as an unnecessary region so that the unnecessary regions can be separately determined. Yet alternatively, a model can be generated to collectively determine two unnecessary regions. Yet alternatively, using a machine learning technique, the cropped image can be input to a neural network model to determine an unnecessary region based on the input image.

In step S409, the image determination unit 215 determines the target image acquired in step S302 or the image edited in step S403 (i.e., the cropped image) as "other". Examples of the image determined as "other" include the image in which a face region is not detected in step S402, the image for which it is determined in step S405 that the main subject does not have the predetermined attribute, and the image for which it is determined in step S407 that an unnecessary region having the certain area or more is present.

The above-described image sorting processing makes it possible to sort the target image acquired in step S302 or the image edited in step S403 (i.e., the cropped image) as "recommended" or "other".

The description returns to the flowchart in Fig. 3.

In step S304, the image sorting unit 210 determines whether the target image or the cropped image is determined as "other". If the target image or the cropped image is determined as "other" (YES in step S304), the processing proceeds to step S305. If the target image or the cropped image is not determined as "other" (NO in step S304), the processing proceeds to step S306.

In step S305, the image sorting unit 210 classifies the target image or the cropped image as "other images". In the present embodiment, the image sorting unit 210 stores the file name or file path of the target image or the cropped image in the RAM 102, thereby adding the target image or the cropped image to an "other images" list. If the target image is not overwritten with the cropped image in step S403, the image sorting unit 210 stores the file names or file paths of both the target image and the cropped image.

In step S306, the image sorting unit 210 classifies the target image or the cropped image as "candidate recommended images". In the present embodiment, the image sorting unit 210 stores the file name or file path of the target image or the cropped image in the RAM 102, thereby adding the target image or the cropped image to a "candidate recommended images" list. If the target image is overwritten with the cropped image in step S403, the image sorting unit 210 can store only the file name or file path of the cropped image. The reason why the image not determined as "other" is not stored as "recommended images" will be described below in step S308.

In step S307, the image sorting unit 210 determines whether the above processing is performed for all the images of the image data set acquired in step S301. If there is an unprocessed image (NO in step S307), the processing returns to step S302. In step S302, the processing continues on the unprocessed image. If the above processing is performed for all the images of the image data set (YES in step S307), the processing proceeds to step S308.

### <Recommended Image Classification>

In step S308, the image classification unit 220 performs recommended image extraction processing for extracting, from an image data set classified as "candidate recommended images" in step S306, cropped images to be finally presented to the user as "recommended images". As described above, the cropped images extracted as "recommended images" are displayed on the display unit of the external apparatus 120 or a display unit of the electronic device of the user.

Although all the images that are not determined as "other" by the image sorting unit 210 can be presented to the user, there is a case where many images are presented to the user, or conversely, few images can be presented to the user. For example, there is a case where many images to be sorted are present and many images are still present even after those determined as "other" are excluded, or there is a case where images determined as "other" are few. In this case, many images are present based only on the sorting result of the image sorting unit 210, which can make it difficult to present the images suitable for the user's purpose to the user in an easily viewable manner. In the present embodiment, the image classification unit 220 extracts the images to be finally presented to the user from among the images that are not classified as "other images", which makes it possible to present the images suitable for the user's purpose in a more easily viewable manner.

In the case of selling pictures of everyday life in a kindergarten to a guardian as in the present embodiment, it is desirable to sort out the images to be presented to the user so that compositions, scenes, and persons as subjects are balanced. To this end, the images classified as "candidate recommended images" are grouped according to compositions, scenes, and persons as subjects, and an appropriate number of images are selected from each of the groups and presented as "recommended images" to the user, which makes it possible to further increase the image sorting effect.

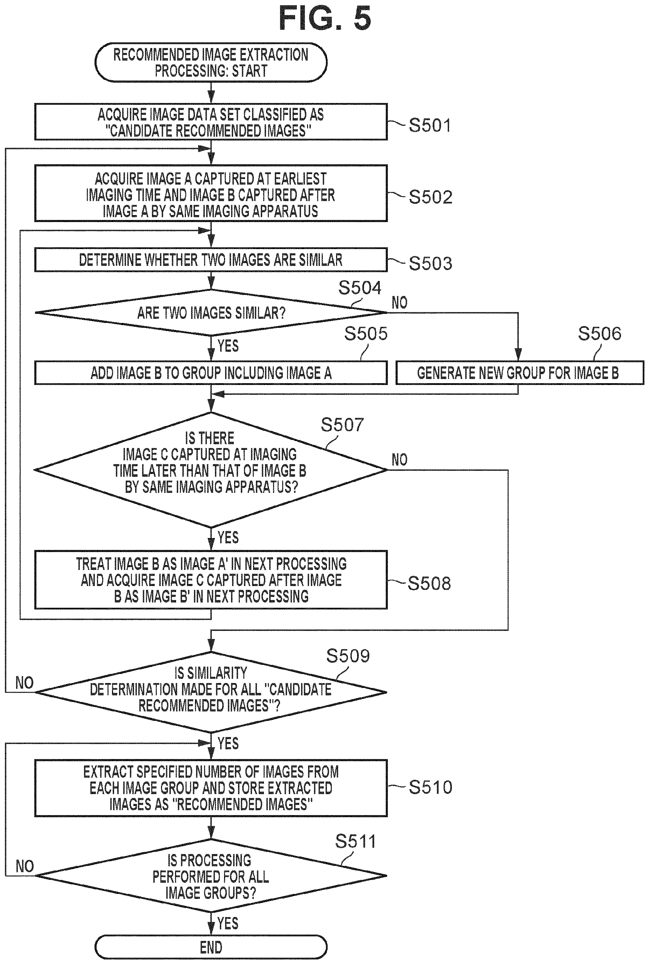

Fig. 5 is a flowchart illustrating the recommended image extraction processing.

In step S501, the image classification unit 220 acquires the image data set classified as "candidate recommended images" in step S306. The grouping unit 221 performs processing of steps S502 to S509 on the image data set acquired in this step, thereby classifying similar images into the same group.

### <Similar Image Determination>

In step S502, the grouping unit 221 acquires, from the image data set acquired in step S501, an image A captured at the earliest imaging time and an image B captured after the image A among images captured by the same imaging apparatus. Imaging time information and imaging apparatus information are recorded in association with each image.

In step S503, the grouping unit 221 determines whether the two images acquired in step S502 are similar in composition or color tone. As the method for determining whether the two images are similar, feature points can be calculated from frequency components of the images, and if the total sum of the distances between the feature points is less than or equal to a threshold, the images can be determined to be similar. Alternatively, the similarity can be determined based on spectrum of hues of the images. Yet alternatively, feature vectors of the images can be calculated using a machine learning model, and the similarity can be determined based on the distance between the feature vectors.

In step S504, based on the result of the determination in step S503, the grouping unit 221 determines whether the two images are similar. If the grouping unit 221 determines that the two images are similar (YES in step S504), the processing proceeds to step S505. If the grouping unit 221 determines that the two images are not similar (NO in step S504), the processing proceeds to step S506.

In step S505, the grouping unit 221 stores the image B as an image of a similar image group to which the image A belongs.

In step S506, the grouping unit 221 generates a new similar image group different from the similar image group to which the image A belongs. The grouping unit 221 then stores the image B as an image of the generated similar image group.

In step S507, the grouping unit 221 determines whether the image data set acquired in step S501 includes an image C captured at an imaging time later than that of the image B by the same imaging apparatus. If the image data set includes the image C (YES in step S507), the processing proceeds to step S508. If the image data set does not include the image C (NO in step S507), the processing proceeds to step S509.

In step S508, the grouping unit 221 treats the image treated as the image B as an image A' in the next processing, and acquires the image C captured after the image B as an image B' in the next processing. The processing then returns to step S503. In this way, the grouping unit 221 compares adjacent two of the images captured by the same imaging apparatus and arranged in order of imaging time, and generates a similar image group. For example, if the images A and B are determined to be similar and then the images B and C are determined to be similar, the images A, B, and C belong to the same similar image group. If the images B and C are determined to be not similar, the images A and B belong to a similar image group and the image C is stored as an image of another similar image group. Then, the similarity between the image C and an image D captured after the image C is determined.

In step S509, the grouping unit 221 determines whether the above processing is performed for all "candidate recommended images" of the image data set acquired in step S501. As a result of the determination, if unprocessed images are left (NO in step S509), the processing returns to step S502. In step S502, the grouping unit 221 acquires an image captured at the earliest imaging time from among the unprocessed images as the image A, and the processing continues. If the processing is performed for all "candidate recommended images" (YES in step S509), the processing proceeds to step S510.

While the method of comparing adjacent two of the images captured by the same imaging apparatus and arranged in order of imaging time has been described in the present embodiment, the present embodiment is not limited thereto. For example, the grouping processing can be performed as follows. If the images A and B are determined to be similar in step S503 and then the processing returns to step S502, the image C captured after the image B is treated as the image B' and whether the image A and the image B' (the image C) are similar is determined. If the images A and C are determined to be similar, then similarly, the image D captured after the image C is treated as the image B' and whether the image A and the image B' (the image D) are similar is determined. If the images A and C are determined to be not similar, the image C is treated as the image A', the image D is treated as the image B', and whether the image A' (the image C) and the image B' (the image D) are similar is determined.

While the method of generating a similar image group on an imaging apparatus-by-imaging apparatus basis has been described in the present embodiment, the present embodiment is not limited thereto. Alternatively, the similarity between all images captured by different imaging apparatuses can be determined in order of imaging time as described above, and a similar image group can be generated. Yet alternatively, the similarity between images can be determined in alphabetical order of file names, and a similar image group can be generated.

### <Recommended Image Extraction>

In step S510, the recommended image extraction unit 222 extracts a specified number of images from each similar image group generated by the grouping unit 221 and stores the extracted images as "recommended images". The number of images to be extracted as "recommended images" can be a predetermined number (e.g., one) of images in each similar image group, or a predetermined proportion (e.g., three tenths) of images in each similar image group. The number or proportion of images to be extracted can be set in advance by an administrator of the image sorting apparatus 110, or can be set by the recommended image extraction unit 222 itself.

The method for extracting the specified number of images from each similar image group is as follows. The facial expression of the main subject is estimated based on each face region stored in the RAM 102, using a machine learning model that determines a facial expression such as a smiling face or a crying face, and images in which the main subject is not expressionless are extracted. If images are recorded in association with the values of the degree of smile and the degree of eye opening in capturing the images, extraction scores can be calculated so that an image in which the main subject has a high degree of smile with opening eyes has a high score. Then, images having higher extraction scores can be extracted. Alternatively, the image quality of images can be estimated based on the ISO sensitivity or shutter speed recorded in association with each of the images, and images having excellent image quality can be extracted as "recommended images". The images extracted as "recommended images" are added to an extracted image list and stored in the RAM 102.

In step S511, the recommended image extraction unit 222 determines whether the processing of step S510 is performed for all the similar image groups including the similar image group generated in step S506. If there is an unprocessed similar image group (NO in step S511), the processing returns to step S510. In step S510, the processing continues on the unprocessed similar image group. If the processing of step S510 is performed for all the similar image groups (YES in step S511), the recommended image extraction processing in step S308 ends.

Finally, the image classification unit 220 can move the images in the extracted image list, which are stored as "recommended images" in the recommended image extraction processing in step S308, to a folder specified by the user. Alternatively, the images can be automatically transferred to the external apparatus 120 via the network I/F 105 and the network 130. The images stored as "other images" in step S305 can be automatically erased from the ROM 103 or the storage device 104.

As described above, according to the present embodiment, an image is edited based on a face region detected in the image, a subject having a predetermined attribute is detected based on the edited image, and the image is sorted based on an unnecessary region detected in the edited image in which the subject having the predetermined attribute is detected. In this way, a subject having a predetermined attribute is detected based on an edited image, which makes it possible to improve the detection accuracy. An unnecessary region is also detected based on the edited image, which makes it possible to remove the whole or a part of the unnecessary region from the image in advance. Therefore, it is possible to efficiently sort out images suitable for a user's purpose.

### < Variation 1>

With reference to the flowchart of Fig. 5, the case has been described above where, in steps S502 to S509, a similar image group is generated based on similarity in composition or color tone. Instead of this processing, an image group can be generated on a person-by-person (subject-by-subject) basis using a personal authentication technique.

For example, the image classification unit 220 receives from the external apparatus 120 a representative image of an individual person as a subject and stores the representative image in the RAM 102, the ROM 103, or the storage device 104. At this time, the number of persons for which representative images are stored is not specifically limited, and the number of representative images is one or more.

Using the personal authentication technique, the grouping unit 221 determines whether face region data detected by the face detection unit 211 corresponds to the same person as that of the representative image. If the grouping unit 221 determines that the face region data corresponds to the same person as that of the representative image, the target image is added to a personal image group for the person. If the face region data does not correspond to the same person as that of the representative image, a personal image group is newly generated and the target image is stored as an image of the generated personal image group. At this time, an image of the face region and the periphery thereof is stored as a representative image of a new person. The personal authentication technique can be such that, using a machine learning model with an image as an input, the feature vector of a face is calculated and whether a person with the face is the same person as that of the representative image is determined based on the feature vector. Alternatively, the personal authentication technique can be such that whether face region data and representative image data correspond to the same person is determined, and a similar determination is made for all registered persons.

As another method for generating an image group on a person-by-person (subject-by-subject) basis, the feature vector of a face region can be calculated using a machine learning model with an image as an input, and can be recorded in association with the image. Similar processing is also performed on the other images, and when feature vectors are obtained from all the face regions of the images, images in which the distance between the feature vectors of the face regions is less than or equal to a threshold can be determined as images in which the same person appears, and a personal image group can be generated for the images.

For each personal image group generated by the above processing, similar images are determined by the processing of steps S502 to S509, and a similar image group can be generated on a person-by-person (subject-by-subject) basis. Then, the recommended image extraction unit 222 selects a specified number of images from each similar image group generated by the above processing and stores the selected images as "recommended images" through the processing of steps S510 and S511.

### <Variation 2>

With reference to the flowchart of Fig. 4, the case has been described above where, if the main subject having the predetermined attribute is detected in step S405, the processing proceeds to step S406, and an unnecessary region is detected in the cropped image in which the main subject having the predetermined attribute is detected. The present embodiment, however, is not limited thereto. If the image data set includes few images in which the subject having the predetermined attribute appears, it is desirable that even an image partially including an unnecessary region should not be determined as "other".

Considering the above, the region detection unit 214 can detect an unnecessary region later based on the number of cropped images in which the subject having the predetermined attribute is detected. More specifically, the image sorting unit 210 counts the number of cropped images in which the subject having the predetermined attribute is detected. If the counted number of cropped images is smaller than a predetermined number, the processing proceeds to step S408 without proceeding to step S406. In other words, if the number of cropped images is small, the region detection unit 214 does not detect an unnecessary region. This makes it possible to reduce the cropped images to be determined as "other". In this way, an unnecessary region is detected based on the number of cropped images in which the subject having the predetermined attribute is detected, which makes it possible to prevent the number of "other images" from excessively increasing.

It is desirable that the region detection unit 214 should perform image editing processing, such as cropping processing or mask processing, on an image partially including an unnecessary region.

With reference to the flowchart of Fig. 5, the case has been described above where, in step S510, the predetermined number of images or the predetermined proportion of images are selected from each similar image group. The present embodiment, however, is not limited thereto. If the number of images included in a similar image group is less than or equal to a predetermined number, the recommended image extraction unit 222 can select all the images included in the similar image group. The region detection unit 214 can detect an unnecessary region later based on the number of images included in the similar image group. More specifically, if the number of images included in the similar image group is greater than or equal to the predetermined number, the region detection unit 214 detects an unnecessary region. If the number of images included in the similar image group is smaller than the predetermined number, the region detection unit 214 does not detect an unnecessary region. In this way, the region detection unit 214 does not detect an unnecessary region if the number of images included in the similar image group is small. This makes it possible to increase the images to be included in the similar image group.

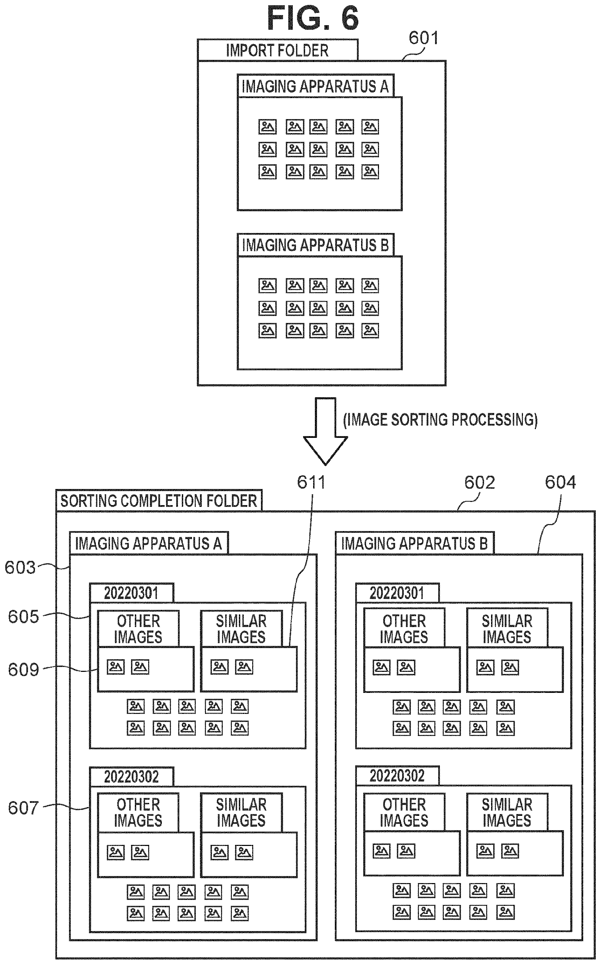

With reference to Fig. 6, an example will be described where, as described above, images imported from the imaging apparatus 100 are stored in association with folders based on the result of sorting the images by the image sorting apparatus 110 and saved in the storage device 104. An import folder 601 stores the images imported from the imaging apparatus 100. After the sorting processing described above is performed, the images are stored in a sorting completion folder 602 based on the result of the sorting processing. Imaging apparatus-specific folders 603 and 604 are in a layer under the sorting completion folder 602. Imaging date-specific folders 605 and 607 are in a layer under the imaging apparatus-specific folder 603. An "other images" folder 609 and a "similar images" folder 611 are in a layer under the imaging date-specific folder 605. In the "other images" folder 609, the images classified as "other images" in step S305 are stored. In the "similar images" folder 611, the images that are added to the similar image group in step S505 and are not selected as "recommended images" in step S510 are stored. The images selected as "recommended images" are stored immediately under the imaging date-specific folder 605. In this way, images are stored in folders based on the result of automatically sorting the images, which makes it easy for the user to select a desired image from a group of images presented as "recommended images". This also makes it easy for the user to know what kinds of images are automatically sorted as "other" and stored in the corresponding folder.

The embodiment of the present invention can also be implemented by processing of supplying a program for implementing one or more functions according to the above-described embodiment to a system or an apparatus via a network or a storage medium, and causing one or more processors of a computer of the system or the apparatus to read and execute the program. The embodiment can also be implemented by a circuit (e.g., an ASIC) for implementing the one or more functions.

The above-described various types of control performed by the CPU 101 can be performed by a single piece of hardware, or processing of the control can be shared by a plurality of pieces of hardware (e.g., a plurality of processors or circuits) to control the entire image sorting apparatus 110.

While the embodiments of the present invention have been described in detail above, the present invention is not limited to these specific embodiments. The embodiments of the present invention also include various forms without departing from the spirit and scope of the invention.

According to the embodiments of the present invention, it is possible to sort out an image suitable for a user's purpose from among a plurality of images.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. An information processing apparatus (110) comprising:
an object detection means (214) for detecting a region (S401) of a first object in an image;
an editing means (212) for editing (S403) the image based on the detected region of the first object;
a first attribute detection means (213) for detecting (S404) a first subject having a first attribute in the edited image;
a second attribute detection means (213) for, in a case where the first subject having the first attribute is detected in the edited image, detecting (S406) a second subject having a second attribute different from the first attribute in the edited image; and
a sorting means (215) for sorting (S408, S409) the edited image based on a result of detecting the second subject having the second attribute.

2. The information processing apparatus (110) according to claim 1, wherein the edited image is sorted based on presence or absence of the second subject having the second attribute in the edited image.

3. The information processing apparatus (110) according to claim 1 or 2, wherein in a case where the second subject having the second attribute is detected in the edited image, the edited image is sorted based on at least one of a positional relationship between a region of the second subject having the second attribute and a region of the first subject having the first attribute, and an area of the region of the second subject having the second attribute.

4. The information processing apparatus (110) according to any one of claims 1 to 3, wherein the first object is a face of a person.

5. The information processing apparatus (110) according to any one of claims 1 to 4, wherein the first attribute is a child.

6. The information processing apparatus (110) according to any one of claims 1 to 5, wherein the second attribute is a blocking object.

7. The information processing apparatus (110) according to any one of claims 1 to 6, wherein the editing is cropping the image.

8. The information processing apparatus (110) according to any one of claims 1 to 7, wherein the edited image is sorted as "recommended" (S408) or "other" (S409).

9. The information processing apparatus (110) according to claim 8, wherein the edited image is stored in a folder corresponding to a result of sorting the edited mage as "recommended" or "other".

10. The information processing apparatus (110) according to claim 8 or 9, wherein an image in which the region of the first object is not detected, and an image in which the region of the first object is detected and the first subject having the first attribute is not detected, are sorted as "other".

11. The information processing apparatus (110) according to any one of claims 8 to 10, wherein at least one of an image in which the second subject having the second attribute is present, an image in which the second subject having the second attribute is present in a state where an area of a region of the second subject having the second attribute is greater than or equal to a threshold, and an image in which the region of the second subject having the second attribute covers a part of a region of the first subject having the first attribute, is sorted as "other".

12. The information processing apparatus (110) according to any one of claims 8 to 11, further comprising a classification means (220) for classifying the edited image sorted as "recommended" into a group.

13. The information processing apparatus (110) according to any one of claims 1 to 12,
wherein coordinates and a size of the region of the first object are output based on input of the image to a neural network model, and
wherein the image is edited by being cropped based on the coordinates and the size of the region of the first object.

14. The information processing apparatus (110) according to claim 13, wherein the image is edited by being converted by contrast adjustment and color tone correction.

15. The information processing apparatus (110) according to any one of claims 1 to 14, wherein the first subject having the first attribute or the second subject having the second attribute is detected based on input of the edited image to a neural network model.

16. The information processing apparatus (110) according to any one of claims 1 to 15, wherein the image includes an image automatically captured based on a predetermined condition.

17. A method for controlling an information processing apparatus (110), the method comprising:
detecting a region (S401) of a first object in an image;
editing the image (S403) based on the detected region of the first object;
detecting a first subject (S404) having a first attribute in the edited image;
in a case where the first subject having the first attribute is detected in the edited image, detecting a second subject (S406) having a second attribute different from the first attribute in the edited image; and
sorting the edited image (S408, S409) based on a result of detecting the subject having the second attribute.

18. A computer-readable storage medium storing a program that when executed on a computer causes the computer to perform the method according to claim 17.

19. A computer program comprising instructions which, when executed by a computer, cause the computer to perform the method according to claim 17.
